# DEMANDE DE BREVET EUROPEEN

(11) **EP 0 893 457 A1**
(43) Date de publication de la demande: **27.01.1999**
(21) Numéro de dépôt: 98202322.8
(22) Date de dépôt: 09.07.1998
(51) Int. Cl.: C08F 14/00, C08F 2/20

(54) **Procédé pour la fabrication de polymères halogénés et polymères halogénés obtenus.**

(30) Priorité: 22.07.1997 BE 9700632
(71) Demandeur: SOLVAY (Société Anonyme), B-1050 Bruxelles (BE)
(72) Inventeur: Lannuzel, Thierry, 39500 Tavaux (FR); Volmer, Sophie, 1200 Bruxelles (BE); Laurent, Guy, 5020 Vedrin (BE); DeClerck, Fredy, 1850 Grimbergen (BE)
(74) Mandataire: Meyers, Liliane

(57) **Abrégé**

Procédé pour la fabrication de polymères halogénés par polymérisation à l'intervention d'un sel d'un copolymère d'un monomère monoéthylènique porteur d'une fonction acide carboxylique et d'un monomère monoéthylènique porteur d'une fonction carboxylate d'alkyle.

## Description

La présente invention concerne un procédé pour la fabrication de polymères halogénés ainsi que les polymères halogénés obtenus.

Il est connu de polymériser le fluorure de vinylidène dans un milieu aqueux de mise en suspension à l'intervention d'un agent de mise en suspension du type des éthers cellulosiques. A titre d'exemples d'éthers cellulosiques couramment recommandés et utilisés en tant qu'agent de mise en suspension dans la polymérisation du fluorure de vinylidène, on peut citer la méthylcellulose, la méthylhydroxyéthylcellulose, la méthylhydroxypropylcellulose et l'éthylhydroxyéthylcellulose.

Les éthers cellulosiques sont des agents de mise en suspension efficaces en ce sens qu'une faible quantité suffit pour produire une dispersion stable. Cependant, même à ces concentrations faibles, le polymère obtenu en utilisant, comme seul agent de mise en suspension, un agent du type des éthers cellulosiques, se colore au contact d'une solution acide ou si on le soumet à un traitement thermique.

Ces problèmes se rencontrent pour le procédé de polymérisation en suspension aqueuse traditionnelle mais peuvent tout aussi bien être prévus pour les procédés qui combinent les caractéristiques du procédé de polymérisation en suspension aqueuse et du procédé de polymérisation en émulsion aqueuse mais aussi pour les procédés qui combinent les caractéristiques de procédé de polymérisation en suspension aqueuse et du procédé de polymérisation en microsuspension aqueuse.

Le brevet US 4022737 divulgue la stabilisation d'une dispersion aqueuse de particules très finement divisées (0,1-60 microns) de polymères du fluorure de vinylidène, au moyen d'un copolymère porteur de fonctions acide carboxylique ayant une acidité d'au moins 20 et contenant au moins 30 % en poids d'un comonomère monoéthylènique portant une chaîne latérale d'au moins 8 atomes de carbone. Les fonctions acide carboxylique du copolymère sont neutralisées par une base pour le rendre hydrosoluble. Les dispersions aqueuses obtenues sont utilisées pour déposer des films sur une surface métallique ou sur du papier ainsi que pour préparer des films utilisés dans l'emballage ou la fabrication de laminés.

La présente invention a pour objet de procurer un procédé simple et efficace pour fabriquer des polymères halogénés, et plus particulièrement des polymères contenant du fluor (incluant les polymères du fluorure de vinylidène) qui ne se colorent pas au contact d'une solution acide ou si on les soumet à un traitement thermique.

A cet effet, l'invention concerne un procédé pour la fabrication de polymères halogénés par polymérisation de monomères halogénés, caractérisé par l'intervention d'un sel d'un copolymère d'un monomère monoéthylènique porteur d'une fonction acide carboxylique et d'un monomère monoéthylènique porteur d'une fonction carboxylate d'alkyle. Le copolymère d'un monomère monoéthylènique porteur d'une fonction acide carboxylique et d'un monomère monoéthylènique porteur d'une fonction carboxylate d'alkyle est désigné ci-après par le vocable "copolymère acrylique".

Par copolymère acrylique, on entend désigner aux fins de la présente invention, tout copolymère qui résulte de la copolymérisation d'un monomère monoéthylènique porteur d'une fonction acide carboxylique et d'un monomère monoéthylènique porteur d'une fonction carboxylate d'alkyle.

Parmi les monomères monoéthylèniques porteur d'une fonction acide carboxylique utilisables pour la réalisation de la présente invention, on donne la préférence aux acides carboxyliques monoéthylèniques contenant au total de 3 à 8 atomes de carbone. A titre d'exemples de tels acides carboxyliques, on peut citer l'acide acrylique, l'acide méthacrylique, l'acide crotonique, l'acide isocrotonique, l'acide vinylacétique, l'acide 4-pentènoïque, l'acide 2-hexènoïque, l'acide 3-hexènoïque, l'acide 6-heptènoïque et l'acide 2-octènoïque. Parmi ces acides, les acides carboxyliques monoéthylèniques contenant au total de 3 à 5 atomes de carbone sont préférés. Les acides acrylique et méthacrylique sont particulièrement préférés, l'acide acrylique est tout particulièrement préféré.

Parmi les monomères monoéthylèniques porteur d'une fonction carboxylate d'alkyle utilisables pour la réalisation de la présente invention, on donne la préférence aux carboxylates d'alkyle obtenus par la réaction d'un acide carboxylique monoéthylènique contenant au total de 3 à 8, de préférence de 3 à 5 atomes de carbone, avec un alcool choisi parmi les alcools linéaires ou ramifiés contenant de 1 à 20 atomes de carbone comme par exemple le méthanol, l'éthanol, l'isopropanol, le n-butanol, l'isobutanol, le t-butanol, l'hexanol, le n-octanol, le 2-éthylhexanol, le décanol, l'isodécanol, l'alcool laurique, l'hexadécanol et l'octadécanol, mais aussi le cyclohexanol et l'alcool benzylique. Parmi ces alcools, ceux contenant de 1 à 10 atomes de carbone sont préférés. Le 2-éthylhexanol est tout particulièrement préféré. Les acrylate et méthacrylate de 2-éthylhexyle sont les monomères monoéthylèniques porteur d'une fonction carboxylate d'alkyle préférés et l'acrylate de 2-éthylhexyle est tout particulièrement préféré.

Le copolymère acrylique est donc de manière préférée un copolymère qui résulte de la copolymérisation d'un monomère monoéthylènique porteur d'une fonction acide carboxylique contenant au total de 3 à 8 atomes de carbone et d'un monomère monoéthylènique porteur d'une fonction carboxylate d'alkyle obtenu par la réaction d'un monomère monoéthylénique porteur d'une fonction acide carboxylique contenant au total de 3 à 8 atomes de carbone et d'un alcool linéaire ou ramifié contenant de 1 à 20 atomes de carbone.

De manière plus que préférée, le copolymère acrylique est un copolymère qui résulte de la copolymérisation d'un monomère monoéthylènique porteur d'une fonction acide carboxylique contenant au total de 3 à 5 atomes de carbone et d'un monomère monoéthylènique porteur d'une fonction carboxylate d'alkyle obtenu par la réaction d'un monomère monoéthylénique porteur d'une fonction acide carboxylique contenant au total de 3 à 5 atomes de carbone et d'un alcool linéaire ou ramifié contenant de 1 à 10 atomes de carbone.

Le copolymère acrylique tout particulièrement préféré est un copolymère qui résulte de la copolymérisation d'acide acrylique et d'acrylate de 2-éthylhexyle.

Le copolymère acrylique utilisé aux fins de la présente invention contient au moins 75 % en poids, par rapport au poids total des monomères, du monomère monoéthylènique porteur d'une fonction acide carboxylique et au plus 25 % en poids, par rapport au poids total des monomères, du monomère monoéthylènique porteur d'une fonction carboxylate d'alkyle.

De préférence, le copolymère acrylique contient au moins 90 % en poids, par rapport au poids total des monomères, du monomère monoéthylènique porteur d'une fonction acide carboxylique et au plus 10 % en poids, par rapport au poids total des monomères, du monomère monoéthylènique porteur d'une fonction carboxylate d'alkyle.

En général, le copolymère acrylique n'est pas réticulé.

Le sel du copolymère acrylique est obtenu par neutralisation d'au moins 50 %, de préférence d'au moins 70 % des fonctions acide carboxylique du copolymère acrylique, au moyen d'une base. De manière plus que préférée, le sel du copolymère acrylique est obtenu par neutralisation d'au moins 90 % des fonctions acide carboxylique du copolymère acrylique, au moyen d'une base.

Toute base capable de donner lieu à la formation de sel d'acide carboxylique soluble dans l'eau peut être utilisée pour la réalisation de l'invention. On peut notamment utiliser les bases minérales monovalentes ou les bases organiques azotées solubles dans l'eau. Parmi les bases minérales monovalentes, on peut citer par exemple les hydroxydes de sodium et de potassium. Parmi les bases organiques azotées solubles dans l'eau, on peut citer par exemple l'ammoniaque l'éthylamine, la diéthylamine, la triéthylamine, la diéthanolamine, la triéthanolamine et la diméthyléthanolamine. Parmi les bases citées, l'hydroxyde de sodium est tout particulièrement préféré.

Le sel du copolymère acrylique est donc de préférence un sel de sodium du copolymère acrylique.

Le plus souvent, le sel du copolymère acrylique est mis en oeuvre dans le milieu aqueux de polymérisation en une quantité d'au moins 0,03 % en poids, de préférence d'au moins 0,05 % en poids, par rapport au poids total de monomère mis en oeuvre à la polymérisation. De même, le sel du copolymère acrylique est mis en oeuvre dans le milieu aqueux de polymérisation en une quantité d'au plus 0,6 % en poids, de préférence d'au plus 0,4 % en poids, par rapport au poids total de monomère mis en oeuvre à la polymérisation.

Le procédé de fabrication de polymères halogénés selon l'invention est de préférence un procédé de polymérisation en suspension aqueuse faisant intervenir un agent de mise en suspension.

Le procédé de fabrication de polymères halogénés selon l'invention pourrait tout aussi bien être un procédé qui combine les caractéristiques du procédé de polymérisation en suspension aqueuse et du procédé de polymérisation en émulsion aqueuse mais aussi un procédé qui combine les caractéristiques de procédé de polymérisation en suspension aqueuse et du procédé de polymérisation en microsuspension aqueuse.

Suivant un mode de réalisation particulièrement préféré du procédé de l'invention, on fabrique des polymères halogénés par polymérisation en suspension aqueuse de monomères halogénés à l'intervention d'un agent de mise en suspension selon lequel l'agent de mise en suspension est constitué essentiellement d'un sel d'un copolymère d'un monomère monoéthylènique porteur d'une fonction acide carboxylique et d'un monomère monoéthylènique porteur d'une fonction carboxylate d'alkyle.

Le procédé selon l'invention est de manière préférée un procédé de type discontinu.

L'agent de mise en suspension intervenant dans le procédé selon l'invention est, de préférence constitué exclusivement du sel du copolymère acrylique.

L'agent de mise en suspension, mis en oeuvre dans le procédé de l'invention, peut être constitué d'un mélange d'un sel du copolymère acrylique en quantité prépondérante et d'une quantité minimale d'un autre agent de mise en suspension en tant qu'agent de mise en suspension secondaire. Cet agent de mise en suspension secondaire est par exemple du type des éthers cellulosiques. En général, la quantité de l'agent de mise en suspension secondaire ne dépasse pas 5 %, de préférence pas 3 %, le plus souvent pas 1,5 % du poids total de l'agent de mise en suspension.

Le plus souvent, l'agent de mise en suspension est mis en oeuvre dans le milieu aqueux de polymérisation en une quantité totale d'au moins 0,03 % en poids, de préférence d'au moins 0,05 % en poids, par rapport au poids total de monomère mis en oeuvre à la polymérisation. De même, l'agent de mise en suspension est mis en oeuvre dans le milieu aqueux de polymérisation en une quantité totale d'au plus 0,6 % en poids, de préférence d'au plus 0,4 % en poids, par rapport au poids total de monomère mis en oeuvre à la polymérisation.

Le mode de mise en oeuvre de l'agent de mise en suspension n'est pas critique. De préférence, on met en oeuvre la totalité de l'agent de mise en suspension au départ de la polymérisation et, plus particulièrement, en l'introduisant dans l'eau avant tous les autres ingrédients de la polymérisation (initiateur, monomère, le cas échéant agent régulateur de chaînes, etc.).

Le procédé de fabrication de polymères halogénés s'applique de préférence à la fabrication de polymères contenant du fluor et de manière plus que préférée à la fabrication de polymères du fluorure de vinylidène.

Par polymères halogénés, on entend désigner aux fins de la présente invention, aussi bien les homopolymères que les copolymères de monomères halogénés; notamment les homopolymères de monomères halogénés tels que le fluorure de vinylidène, le fluorure de vinyle, le trifluoréthylène, le tétrafluoréthylène, le chlorotrifluoréthylène, l'hexafluoropropylène, le chlorure de vinyle, le chlorure de vinylidène ainsi que les copolymères de ces monomères halogénés et les copolymères d'un de ces monomères halogénés avec un autre monomère à insaturation éthylénique tel l'éthylène, les monomères acryliques ou méthacryliques, l'acétate de vinyle.

Par polymères contenant du fluor, on entend désigner aux fins de la présente invention, aussi bien les homopolymères que les copolymères de monomères contenant du fluor, notamment les homopolymères du fluorure de vinylidène, du fluorure de vinyle, du trifluoréthylène, du tétrafluoréthylène, du chlorotrifluoréthylène, de l'hexafluoropropylène ainsi que les copolymères de ces monomères contenant du fluor tels que par exemple le copolymère du tétrafluoréthylène et de l'hexafluoropropylène, les copolymères du fluorure de vinylidène avec un autre monomère fluoré tel que défini ci-dessus et les copolymères du fluorure de vinyle avec un autre monomère fluoré tel que défini ci-dessus. Les copolymères d'un des monomères contenant du fluor cité ci-dessus avec un autre monomère à insaturation éthylénique sont également considérés. Le copolymère du tétrafluoréthylène et de l'éthylène et le copolymère du trifluoréthylène et de l'éthylène en sont des exemples.

Par polymères du fluorure de vinylidène, on entend désigner aux fins de la présente invention aussi bien les homopolymères du fluorure de vinylidène, que ses copolymères avec d'autres monomères à insaturation éthylénique, avantageusement fluorés. A titre d'exemples de comonomères fluorés utilisables, on peut mentionner le fluorure de vinyle, le trifluoréthylène, le chlorotrifluoréthylène, le tétrafluoréthylène et l'hexafluoropropylène. Les copolymères obtenus contiennent de préférence au moins environ 75 % en poids d'unités monomériques dérivées du fluorure de vinylidène. Avantageusement lesdits copolymères thermoplastiques présentent une température de fusion au moins égale à 130 °C et, de préférence, au moins égale à 150 °C et plus particulièrement encore à 165 °C.

Mise à part la particularité de la mise en oeuvre d'un sel d'un copolymère acrylique, les conditions générales de la polymérisation ne diffèrent pas de celles habituellement mises en oeuvre pour la préparation en suspension aqueuse de polymères halogénés, particulièrement de polymères contenant du fluor et plus particulièrement de polymères du fluorure de vinyle.

La polymérisation est en général réalisée dans des réacteurs à cuve pourvus d'un agitateur à pales, sabres ou turbine.

On peut initier la polymérisation à l'intervention des initiateurs oléosolubles usuels de la polymérisation radicalaire du fluorure de vinylidène. Des exemples représentatifs de tels initiateurs sont les peroxydicarbonates de dialkyle, le peroxyde d'acétylcyclohexanesulfonyle, le peroxyde de dibenzoyle, le peroxyde de dicumyle, les perbenzoates de t-alkyle et les perpivalates de t-alkyle. On donne néanmoins la préférence aux peroxydicarbonates de dialkyle, tels que les peroxydicarbonates de diéthyle et de di-isopropyle, et aux perpivalates de t-alkyle, tels que les perpivalates de t-butyle et de t-amyle. Les peroxydicarbonates de dialkyle, tels que les peroxydicarbonates de diéthyle et de di-isopropyle, sont tout particulièrement préférés.

L'initiateur peut être mis en oeuvre en totalité au départ de la polymérisation ou par portions ou en continu en cours de polymérisation. La quantité d'initiateur oléosoluble mise en oeuvre à la polymérisation n'est pas critique. On peut donc mettre en oeuvre les quantités usuelles d'initiateur, c'est-à-dire d'environ 0,05 à 3 % en poids par rapport au monomère mis en oeuvre et, de préférence d'environ 0,05 à 2,5 % en poids.

Comme évoqué ci-dessus, la polymérisation du fluorure de vinylidène peut s'effectuer en présence de régulateurs de chaînes. A titre d'exemples de régulateurs de chaînes connus des polymères du fluorure de vinylidène, on peut citer les cétones contenant de trois à quatre atomes de carbone, les alcools saturés contenant de trois à six atomes de carbone, les carbonates de bis(alkyle) dont les groupements alkyles contiennent cinq atomes de carbone au plus.

Lorsqu'on fait appel à un régulateur de chaînes, celui-ci est mis en oeuvre en des quantités usuelles. Pour fixer les idées, les agents régulateurs de chaînes sont généralement mis en oeuvre à raison d'environ 0,5 à 5 % en poids par rapport au monomère mis en oeuvre. On peut mettre en oeuvre l'agent régulateur de chaînes en totalité au départ de la polymérisation ou encore par portions ou en continu en cours de polymérisation.

La température de polymérisation peut se situer indifféremment en dessous ou au-dessus de la température critique du fluorure de vinylidène (30,1 °C). Lorsque la température se situe en dessous de 30,1 °C, la polymérisation s'effectue au sein d'une suspension aqueuse classique de fluorure de vinylidène liquide sous une pression égale à la pression de vapeur saturante du fluorure de vinylidène. Lorsque la température se situe au-dessus de 30,1 °C, elle s'effectue au sein d'une suspension aqueuse de fluorure de vinylidène gazeux se trouvant avantageusement sous pression élevée. On peut donc réaliser le procédé selon l'invention à des températures allant de la température ambiante à environ 110 °C. On préfère néanmoins effectuer la polymérisation à une température située au-dessus de 30,1 °C. Suivant un mode de réalisation préféré du procédé selon l'invention, on effectue la polymérisation du fluorure de vinylidène à une température comprise entre 35 et 100 °C et sous des pressions initiales d'environ 55 à 200 bars. On peut, bien entendu, augmenter la productivité des réacteurs en procédant en cours de polymérisation à des injections supplémentaires de monomère ou d'eau ou à une élévation de la température de polymérisation.

Les polymères du fluorure de vinylidène obtenus selon le procédé de l'invention sont isolés, en fin de polymérisation, de manière conventionnelle par essorage, suivi de séchage.

L'invention porte également sur des polymères halogénés caractérisés en ce qu'ils présentent au moins une des propriétés suivantes qui est améliorée : a) résistance aux acides, b) stabilité thermique.

Par résistance aux acides améliorée, on entend que l'écart de coloration (ΔL) en coordonnée trichromatique L* mesuré suite au test HCl est amélioré.

Par stabilité thermique améliorée, on entend que l'indice de jaune YI mesuré suite au test BOY et/ou l'indice de jaune YI (10 min) mesuré suite au test BOY (10 min) sont/est amélioré(s).

Les polymères du fluorure de vinylidène obtenus selon le procédé de l'invention font également l'objet de la présente invention.

Les polymères halogénés sont de préférence des polymères contenant du fluor et de manière plus que préférée, des polymères du fluorure de vinylidène.

Un effet surprenant de la présente invention réside dans le fait que l'utilisation comme agent de mise en suspension principal d'un sel d'un copolymère acrylique tel que défini ci-dessus procure aux polymères obtenus, une résistance aux acides améliorée, une stabilité thermique améliorée ou les deux.

Les exemples qui suivent sont destinés à illustrer le procédé selon l'invention sans toutefois en limiter la portée. Dans l'exemple comparatif 1, on met en oeuvre un agent de mise en suspension du type des éthers cellulosiques. Dans les exemples 2 et 4 selon l'invention, on met en oeuvre un agent de mise en suspension du type sel d'un copolymère acrylique. Dans l'exemple 3 selon l'invention, on met en oeuvre un agent de mise en suspension qui est un mélange d'une quantité prédominante d'un sel d'un copolymère acrylique et d'une quantité minimale d'un éther cellulosique.

### Description du test de prise de coloration en milieu acide (Test HCl)

Une plaquette carrée de 30 mm de côté et de 2 mm d'épaisseur de PVDF, préalablement découpée dans une plaque pressée, est tout d'abord fixée sur un support en verre de manière telle que les deux faces de la plaquette puissent être exposées librement au milieu agressif. La plaquette est alors totalement immergée dans de l'HCl à 37 % contenu dans un réacteur en verre de forme haute, d'une contenance de 3 litres, muni d'un couvercle en verre, d'un thermomètre longue tige plongeante 0-100 °C, d'une colonne réfrigérante, d'un chauffe réacteur et d'un potentiomètre. L'HCl est alors amené à une température de 80 °C que l'on maintient constante pendant 72 heures. Après ce temps, la plaquette est rincée et séchée.

La coloration de la plaquette traitée est alors comparée à celle d'une plaquette du même échantillon n'ayant pas subi le test.

### Description du test de stabilité thermique (Test BOY)

Le PVDF est soumis à une contrainte thermique et mécanique lors de l'injection d'une éprouvette avec une presse à injecter. La pièce à injecter, de dimension 60x40x4 mm, est injectée par voile (31,5x0,8 mm). Le moule est raccordé à un système de régulation thermique. La température du moule est régulée à 60 ± 2 °C. La presse à injecter utilisée est une presse à injecter BOY 15 S qui se caractérise par une force de verrouillage de 22 tonnes, un cylindre de 22 mm de diamètre, une buse ouverte de 2,1 mm de diamètre comme nez d'injection, un clapet antiretour constitué de 3 canaux en V, une vis caractérisée par un rapport L/D de 20, 3 zones (12D/4D/4D) et un taux de compression de 1,9. Deux résistances chauffantes indépendantes sont placées sur le fourreau (zones 1 et 2) et deux résistances couplées sur la zone du clapet antiretour et le nez d'injection (zone 3). La température de ces 3 zones de chauffe sont dans l'ordre 190 °C, 220 °C et 265 °C. Le temps de résidence dans le fourreau est de l'ordre de 5 minutes. L'effet thermique peut être augmenté par le maintien du polymère fondu chaud dans le fourreau de la machine en interrompant le cycle d'injection pendant 10 minutes (test BOY 10 min).

### Description de la méthode de mesure pour la détermination des caractéristiques colorimétriques

La détermination des coordonnées trichromatiques L*, a*, b* et YI des échantillons est effectuée selon la norme ASTM D-1925 au moyen d'un spectrocolorimètre "ULTRASCAN" de HUNTERLAB calibré régulièrement grâce à 3 étalons colorimétriques de calibrage HUNTERLAB (blanc, noir, gris). Le référentiel de mesure est le CIELAB 1976, l'illuminant est le D 65 de la CIE, la bande spectrale analysée est de 400 à 700 nm, l'intervalle spectral de mesurage est de 5 nm, le diamètre de la plage examinée et de 0,95 cm, l'observateur standard est à 10° et l'observation se fait sous un angle de 8°.

Les valeurs mesurées pour la coordonnée trichromatique L* caractérisant la clarté de l'échantillon, ont été retenues pour les échantillons ayant subi le test HCl. L'écart de coloration (ΔL) en coordonnée trichromatique L* entre l'échantillon ayant subi le test HCl et le même échantillon n'ayant pas subi le test est donné comme la moyenne de 5 mesures. La reproductibilité moyenne de la mesure est de ± 0,2 unité.

Pour les échantillons ayant subi le test BOY ou le test BOY 10 min, les valeurs retenues sont celles de l'indice de jaune YI.

### Exemples 1 et 2

Dans un réacteur de 35 litres, muni d'un agitateur à pales battoir et d'une double enveloppe, on introduit successivement une certaine quantité d'eau déminéralisée et d'une solution aqueuse de l'agent de mise en suspension à 10 g/litre pour l'agent de mise en suspension du type sel d'un copolymère acrylique et à 15 g/litre pour l'agent de mise en suspension du type éther cellulosique. Les quantités d'eau déminéralisée et de dispersant introduites ainsi que la nature du dispersant sont précisées au Tableau I. On met en marche l'agitation à 450 t/min dans l'exemple 1, 700 t/min dans l'exemple 2. On élimine la plus grande partie de l'oxygène présent dans le réacteur par trois mises sous vide à 40 mbars (à 15 °C) avec, après les deux premières mises sous vide, remise sous pression de 1 bar d'azote. On introduit alors du chloroformiate de diéthyle, du peroxyde d'hydrogène et de la chaux en quantité stoéchiométrique pour synthétiser in-situ le peroxydicarbonate de diéthyle (initiateur) en des quantités précisées au Tableau I. Le carbonate de bis(éthyle) (régulateur de chaînes) dont les quantités sont précisées au Tableau I est ensuite introduit dans le réacteur. Après 5 minutes, on introduit une charge unique de 8027 g de fluorure de vinylidène, puis on met progressivement en chauffe le réacteur jusqu'à atteindre un premier palier de température de 41,5 °C, d'une durée d'environ 1 heure 30 minutes. On porte ensuite la température à 61 °C et on l'y maintient pendant environ 2 heures. En fin de polymérisation, on dégaze la suspension aqueuse (en abaissant la pression jusqu'à la pression atmosphérique) et on lave le polymère sur essoreuse jusqu'à ce que les eaux de lavage ne contiennent plus de mousse. On sèche le polymère en étuve à 60 °C jusqu'à poids constant. La durée totale de la polymérisation, ainsi que le taux de conversion sont repris au Tableau I.

### Exemples 3 et 4

Dans un réacteur identique à celui décrit ci-dessus, on introduit successivement une certaine quantité d'eau déminéralisée et d'une solution aqueuse de l'agent de mise en suspension à 10 g/litre pour l'agent de mise en suspension du type sel d'un copolymère acrylique et à 15 g/litre pour l'agent de mise en suspension du type éther cellulosique. Les quantités d'eau déminéralisée et de dispersant introduites ainsi que la nature du dispersant sont précisées au Tableau I. On met en marche l'agitation à 700 t/min. On élimine la plus grande partie de l'oxygène présent dans le réacteur par trois mises sous vide à 40 mbars (à 15 °C) avec, après les deux premières mises sous vide, remise sous pression de 1 bar d'azote. On introduit alors du chloroformiate de diéthyle, du peroxyde d'hydrogène et de la chaux en quantité stoechiométrique pour synthétiser in-situ le peroxydicarbonate de diéthyle (initiateur) en des quantités précisées au Tableau I. Le carbonate de bis(éthyle) (régulateur de chaînes) dont les quantités sont précisées au Tableau I est ensuite introduit dans le réacteur. Après 5 minutes, on injecte le fluorure de vinylidène en des quantités précisées au Tableau I sous la dénomination VF₂ initial, puis on met progressivement en chauffe le réacteur jusqu'à atteindre un premier palier de température de 41,5 °C, d'une durée d'environ 3 heures. On porte ensuite la température à 61 °C et on l'y maintient pendant environ 2 heures. En cours de polymérisation, on injecte progressivement du fluorure de vinylidène supplémentaire en des quantités précisées au Tableau I et à une allure telle que la pression ne dépasse jamais 120 bars. En fin de polymérisation, on dégaze la suspension aqueuse (en abaissant la pression jusqu'à la pression atmosphérique) et on lave le polymère sur essoreuse jusqu'à ce que les eaux de lavage ne contiennent plus de mousse. On sèche le polymère en étuve à 60 °C jusqu'à poids constant. La durée totale de la polymérisation, ainsi que le taux de conversion sont repris au Tableau I.

Les abréviations suivantes sont utilisées dans le Tableau I :
EHEC : éthylhydroxyéthylcellulose,
MHPC : méthylhydroxypropylcellulose,
COP 1 acrylique : sel de sodium d'un copolymère d'acide acrylique (91,5 % en poids) et d'acrylate de 2-éthylhexyle (8,5 % en poids). Le sel de sodium est obtenu par neutralisation au moyen d'hydroxyde de sodium, de 95 % des fonctions acide carboxylique du copolymère d'acide acrylique et d'acrylate de 2-éthylhexyle vendu sous la marque MODAREZ® V 276 (Protex).
COP 2 acrylique : sel de sodium du copolymère d'acide acrylique et d'acrylate de 2-éthylhexyle. Le sel de sodium est obtenu par neutralisation au moyen d'hydroxyde de sodium, de 95 % des fonctions acide carboxylique du copolymère d'acide acrylique et d'acrylate de 2-éthylhexyle vendu sous la marque MODAREZ® V 274 (Protex).

Le MFI (Melt Flow Index) mesuré selon la norme ISO 1133 à une température de 230 °C et sous un poids de 5 kg pour l'exemple 3 et de 2,16 kg pour les autres exemples, le poids spécifique apparent par tassement (PSAT), l'écart de coloration (ΔL) en coordonnée trichromatique L* mesuré suite au test HCl, l'indice de jaune YI mesuré suite au test BOY et l'indice de jaune YI (10 min) mesuré suite au test BOY 10 min, des polymères du fluorure de vinylidène produits selon les exemples 1 à 4, figurent dans le Tableau II.

La comparaison des caractéristiques colorimétriques mesurées pour les polymères du fluorure de vinylidène produits selon les exemples 2, 3 et 4 avec celles du polymère de fluorure de vinylidène produit selon l'exemple de comparaison 1, indique que les polymères du fluorure de vinylidène préparés selon l'invention, à l'intervention d'un agent de mise en suspension du type sel d'un copolymère acrylique ou à l'intervention d'un agent de mise en suspension qui est un mélange d'une quantité prédominante d'un agent de mise en suspension du type sel d'un copolymère acrylique avec une quantité minimale d'un agent de mise en suspension du type éther cellulosique, sont beaucoup plus résistants à un traitement en milieu acide ou à un traitement thermique que les polymères du fluorure de vinylidène préparés à l'intervention d'un agent de mise en suspension du type éther cellulosique comme seul agent de mise en suspension.

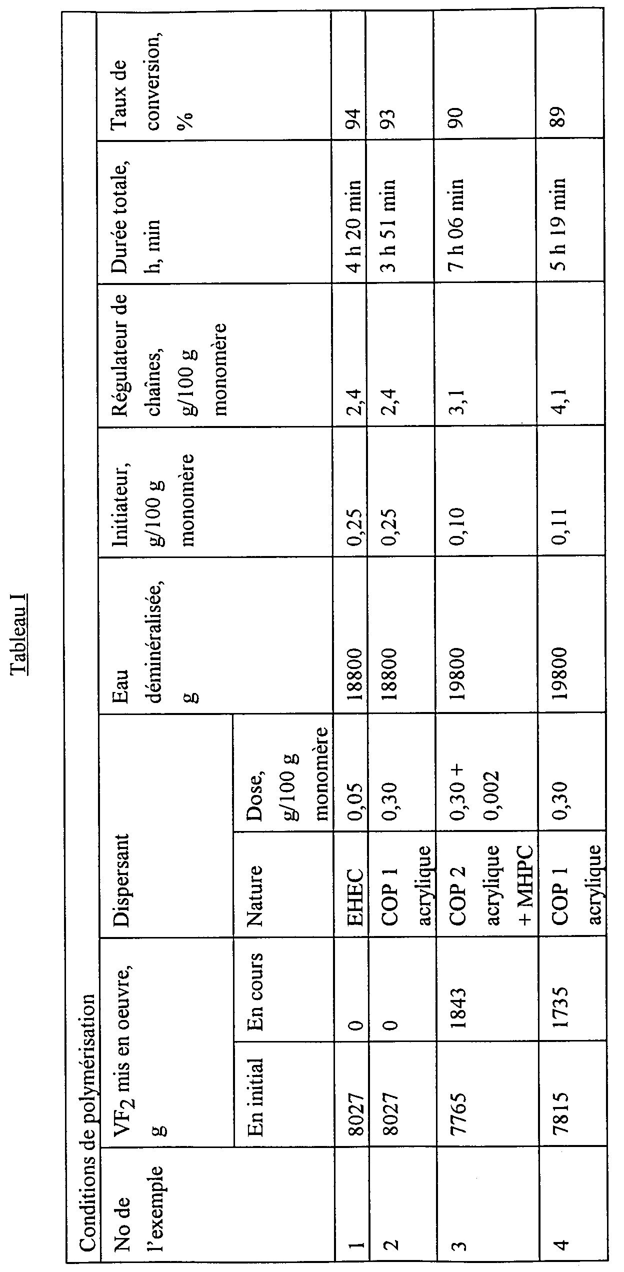

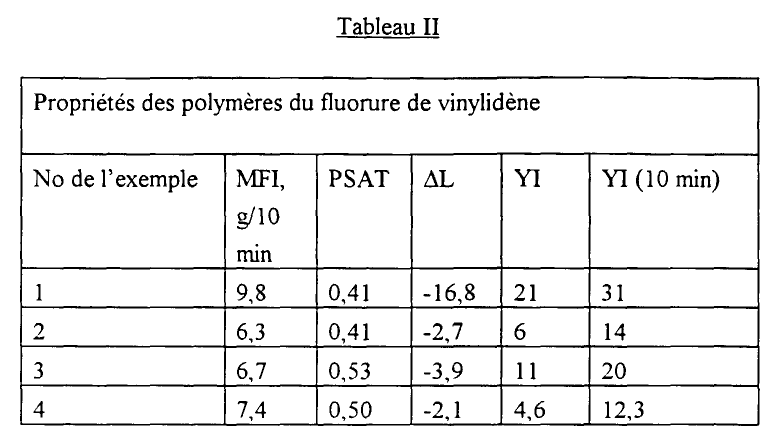

## Revendications

1. Procédé pour la fabrication de polymères halogénés par polymérisation de monomères halogénés, caractérisé par l'intervention d'un sel d'un copolymère (acrylique) d'un monomère monoéthylènique porteur d'une fonction acide carboxylique et d'un monomère monoéthylènique porteur d'une fonction carboxylate d'alkyle.

2. Procédé pour la fabrication de polymères halogénés selon la revendication 1, caractérisé en ce que le copolymère acrylique résulte de la copolymérisation d'un monomère monoéthylènique porteur d'une fonction acide carboxylique contenant au total de 3 à 8 atomes de carbone et d'un monomère monoéthylènique porteur d'une fonction carboxylate d'alkyle obtenu par la réaction d'un monomère monoéthylénique porteur d'une fonction acide carboxylique contenant au total de 3 à 8 atomes de carbone et d'un alcool linéaire ou ramifié contenant de 1 à 20 atomes de carbone.

3. Procédé pour la fabrication de polymères halogénés selon l'une quelconque des revendications 1 à 2, caractérisé en ce que le copolymère acrylique résulte de la copolymérisation d'un monomère monoéthylènique porteur d'une fonction acide carboxylique contenant au total de 3 à 5 atomes de carbone et d'un monomère monoéthylènique porteur d'une fonction carboxylate d'alkyle obtenu par la réaction d'un monomère monoéthylénique porteur d'une fonction acide carboxylique contenant au total de 3 à 5 atomes de carbone et d'un alcool linéaire ou ramifié contenant de 1 à 10 atomes de carbone.

4. Procédé pour la fabrication de polymères halogénés selon l'une quelconque des revendications 1 à 3, caractérisé en ce que le copolymère acrylique résulte de la copolymérisation d'acide acrylique et d'acrylate de 2-éthylhexyle.

5. Procédé pour la fabrication de polymères halogénés selon l'une quelconque des revendications 1 à 4, caractérisé en ce que le copolymère acrylique contient au moins 75 % en poids, par rapport au poids total des monomères, du monomère monoéthylènique porteur d'une fonction acide carboxylique et au plus 25 % en poids, par rapport au poids total des monomères, du monomère monoéthylènique porteur d'une fonction carboxylate d'alkyle.

6. Procédé pour la fabrication de polymères halogénés selon l'une quelconque des revendications 1 à 5, caractérisé en ce que le sel du copolymère acrylique est obtenu par neutralisation d'au moins 90 % des fonctions acide carboxylique au moyen d'une base.

7. Procédé pour la fabrication de polymères halogénés selon l'une quelconque des revendications 1 à 6, caractérisé en ce que le sel du copolymère acrylique est mis en oeuvre dans le milieu aqueux de polymérisation en une quantité de 0,03 à 0,6 % en poids par rapport au poids total de monomère mis en oeuvre à la polymérisation.

8. Procédé pour la fabrication de polymères halogénés selon l'une quelconque des revendications 1 à 6, caractérisé en ce que le procédé est un procédé de polymérisation en suspension aqueuse faisant intervenir un agent de mise en suspension et en ce que l'agent de mise en suspension est constitué exclusivement du sel du copolymère acrylique.

9. Procédé pour la fabrication de polymères halogénés selon l'une quelconque des revendications 1 à 6, caractérisé en ce que le procédé est un procédé de polymérisation en suspension aqueuse faisant intervenir un agent de mise en suspension et en ce que l'agent de mise en suspension est constitué d'un mélange du sel du copolymère acrylique et d'une quantité minimale d'un autre agent de mise en suspension.

10. Procédé pour la fabrication de polymères halogénés selon l'une quelconque des revendications 8 à 9, caractérisé en ce que l'agent de mise en suspension est mis en oeuvre dans le milieu aqueux de polymérisation en une quantité totale de 0,03 à 0,6 % en poids par rapport au poids total de monomère mis en oeuvre à la polymérisation.

11. Procédé pour la fabrication de polymères halogénés selon l'une quelconque des revendications 1 à 10, caractérisé en ce que les polymères halogénés sont des polymères contenant du fluor.

12. Procédé pour la fabrication de polymères halogénés selon l'une quelconque des revendications 1 à 11, caractérisé en ce que les polymères halogénés sont des polymères du fluorure de vinylidène.

13. Polymères halogénés caractérisés en ce qu'ils présentent au moins une des propriétés suivantes qui est améliorée : a) résistance aux acides, b) stabilité thermique.

14. Polymères halogénés selon la revendication 13, caractérisés en ce que les polymères halogénés sont des polymères contenant du fluor.

15. Polymères halogénés selon l'une quelconque des revendications 13 à 14, caractérisés en ce que les polymères halogénés sont des polymères du fluorure de vinylidène.
